(19) Europäisches Patentamt / European Patent Office / Office européen des brevets

(11) **EP 3 733 744 A1**

(12) **EUROPEAN PATENT APPLICATION**
published in accordance with Art. 153(4) EPC

(43) Date of publication:
**04.11.2020 Bulletin 2020/45**

(51) Int Cl.:
**C08J 5/18** (2006.01)    **B32B 15/082** (2006.01)
**B32B 27/30** (2006.01)

(21) Application number: **18897824.1**

(22) Date of filing: **27.12.2018**

(86) International application number:
**PCT/JP2018/048038**

(87) International publication number:
**WO 2019/131831 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2017  JP 2017250604**

(71) Applicant: **Kuraray Co., Ltd.**
**Kurashiki-shi, Okayama 710-0801 (JP)**

(72) Inventors:
• **MAEDA, Kaori**
  **Tainai-shi, Niigata 959-2691 (JP)**
• **AOKI, Yoshiaki**
  **Tainai-shi, Niigata 959-2691 (JP)**
• **TAKEDA, Hideaki**
  **Tainai-shi, Niigata 959-2691 (JP)**

(74) Representative: **Müller-Boré & Partner**
**Patentanwälte PartG mbB**
**Friedenheimer Brücke 21**
**80639 München (DE)**

(54) **ACRYLIC RESIN FILM AND MANUFACTURING METHOD THEREFOR**

(57)    An acrylic resin film having a total haze of 0.01 to 1.0%, a difference in external haze between both surfaces of 0 to 0.5%, a storage modulus (E'), as measured at 23°C according to dynamic viscoelastometry under the conditions of a sinusoidal vibration of 1 Hz and a temperature elevation rate of 3°C/min, of 1000 to 2200 MPa, and a maximum value of a loss tangent (Tα) of 90°C to 120°C.

[Fig. 1]

**Description**

Technical Field

The present invention relates to an acrylic resin film having a good surface smoothness and having a low haze, and to a method for producing the film. The invention also relates to a printed resin film, a film for decoration, a film for construction, a laminated film and a laminated body using the acrylic resin film.

Background Art

Taking advantage of the characteristics thereof such as high transparency, high surface hardness, excellent weather resistance and easiness in molding and working operation, an acrylic resin film is used in various application fields of display materials such as signboards and flat panel displays, as well as interior materials and exterior materials for vehicles as grouped in decorative films, interior materials and exterior materials for construction, and interior decoration members. In particular, an acrylic resin film is used as a surface layer material for various members as excellent in surface characteristics.

An acrylic resin film has the above-mentioned characteristics, but a (meth)acrylic resin itself is disadvantageous in that it is brittle, for which, therefore, a technique of giving toughness thereto using multilayer structure polymer particles is employed. On the other hand, using multilayer structure polymer particles often causes some problems in that the particles having protruded out onto surfaces may lower haze, or when the surfaces are printed or coated by vapor deposition, the resultant prints and vapor-deposited products may lose a clear feel and would be cloudy touch films.

In any film applications of printed resin films, films for decoration and films for construction, one surface of the film is given a decorative appearance by printing or vapor deposition thereon, and the decorative surface is appreciated through the film.

In other words, films are required to be highly transparent by themselves, and are also required to have good surface smoothness on both surfaces thereof with little difference between the surfaces in order that the films could be given a good decorative appearance by printing or vapor deposition on any surface thereof.

PTL 1 discloses a sheet-like acrylic resin film formed of an acrylic resin composition of an acrylic resin mixed with rubber elastic particles. PTL 1 discloses an acrylic resin film blended with 25 to 45 parts by mass of rubber elastic particles having a number-average particle size of 10 to 300 nm, which has a rough surface and a smooth surface and in which a difference in an arithmetic mean roughness between the surfaces is 5 to 100 nm.

PTL 2 discloses an optical film and a retardation film containing an acrylic resin and at least two graft copolymers containing a conjugated dienic rubber in an amount of 20 to 65 parts by mass relative to 100 parts by mass of the acrylic resin, in which the at least two graft copolymers differ in the particle size thereof. The external roughness of the film of PTL 2 is 50 nm or less, and the haze thereof is 0.5 to 3%.

PTL 3 discloses an optical film containing a cellulose ester and an acrylic resin, in which the total haze value is 0.80 or less, the internal haze is 0.01 to 0.28, and the elastic modulus in the cross direction is 2700 to 7000 MPa.

The conventional arts described in PTLs 1 to 3 all have defective points to be improved in that the films disclosed therein have a difference in the roughness between both surfaces thereof and the haze is not sufficiently low, and no one has succeeded in creating a film excellent in printability as both surfaces thereof have an excellent surface smoothness, or a film free from color change in base printing as the internal haze thereof is sufficiently low and capable of giving a deep feel.

Citation List

Patent Literature

PTL 1: JP 2016-218478 A
PTL 2: JP 2011-521068 A
PTL 3: JP 2011-154360 A

Summary of Invention

Technical Problem

The present invention has been made in consideration of the above-mentioned situations, and an object thereof is to provide an acrylic resin film excellent in printability as both surfaces thereof have an excellent surface smoothness, free from color change in base printing as the internal haze thereof is sufficiently low and capable of giving a deep feel, and additionally having crack resistance and flexibility though having an appropriate hardness and stiffness, and to provide a method for producing the acrylic resin film.

Solution to Problem

For the purpose of solving the above-mentioned problems, the present inventors have assiduously studied to attain a film having a suitable hardness and crack resistance without worsening surface smoothness and total haze thereof, and as a result, have completed the present invention.

Specifically, the present invention provides the following:

[1] An acrylic resin film having a total haze of 0.01 to 1.0%, a difference in external haze between both surfaces of 0 to 0.5%, a storage modulus (E'), as measured at 23°C according to dynamic viscoelastometry under the conditions of a sinusoidal vibration of 1 Hz and a temperature elevation rate of 3°C/min, of 1000 to 2200 MPa, and a maximum value of a loss tangent (T$\alpha$) of 90°C to 120°C.

[2] The acrylic resin film according to [1], wherein the surface roughness of both surfaces is 1 to 50 nm.

[3] The acrylic resin film according to [1] or [2], wherein the external haze of at least one surface is 0.2% or less.

[4] The acrylic resin film according to any one of [1] to [3], having a trouser tear strength of 1.3 N/mm or more.

[5] The acrylic resin film according to any one of [1] to [4], containing acrylic multilayer structure polymer particles in an amount of 65 to 100% by mass.

[6] The acrylic resin film according to [5], wherein the particle size of the acrylic multilayer structure polymer particles is 10 to 200 nm.

[7] The acrylic resin film according to [5] or [6], wherein the acrylic multilayer structure polymer particles are acrylic multilayer structure polymer particles (A) having at least one crosslinked elastic polymer layer containing 60% by mass or more of an alkyl acrylate monomer unit in which an alkyl group has 1 to 8 carbon atoms and/or a conjugated dienic monomer unit, and having at least one thermoplastic polymer layer containing 70% by mass or more of an alkyl methacrylate monomer unit.

[8] The acrylic resin film according to any one of [1] to [7], containing a UV absorbent of benzotriazoles or triazines.

[9] A printed resin film of the acrylic resin film according to any one of [1] to [8], wherein printing is performed on at least one surface thereof.

[10] A film for decoration of the acrylic resin film according to any one of [1] to [8].

[11] A film for construction of the acrylic resin film according to any one of [1] to [8].

[12] A laminated film having a layer of a metal and/or a metal oxide, a thermoplastic resin layer or a substrate layer on at least one surface of the acrylic resin film according to any one of [1] to [8].

[13] A laminated body having the laminated film according to [12] on the surface of a substrate.

[14] A method for producing an acrylic resin film according to any one of [1] to [8], including a step of melt-extruding a (meth)acrylic resin in a film-like shape through a T-die, and a step of holding the extruded melt in a film-like shape between a pair of cooling rolls, one metal rigid roll and the other metal elastic roll.

Advantageous Effects of Invention

According to the present invention, there can be provided an acrylic resin film excellent in printability as both surfaces thereof have an excellent surface smoothness, free from color change in base printing as the internal haze thereof is sufficiently low and capable of giving a deep feel, and additionally having crack resistance and flexibility though having an appropriate hardness and stiffness, and a method for producing the acrylic resin film.

Brief Description of Drawing

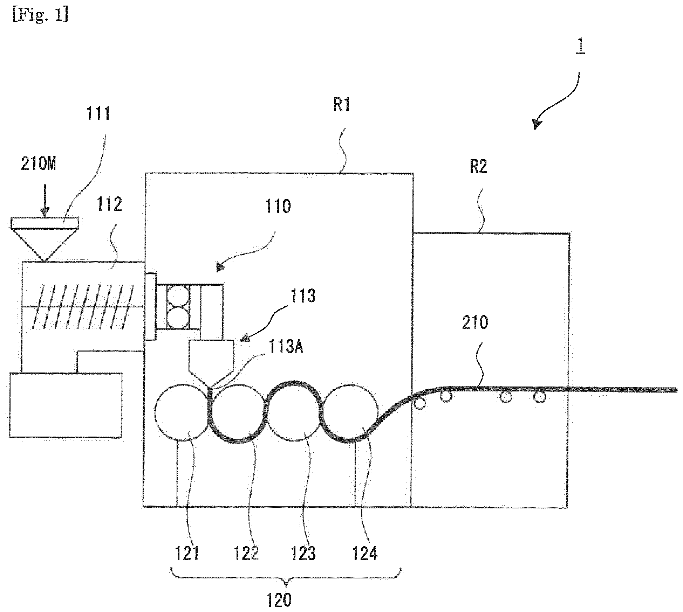

Fig. 1 is one example of a device for producing an acrylic resin film of the present invention.

Description of Embodiments

The acrylic resin film of the present invention has a total haze of 0.01 to 1.0%, a difference in external haze between both surfaces of 0 to 0.5%, a storage modulus (E'), as measured at 23°C according to dynamic viscoelastometry under the conditions of a sinusoidal vibration of 1 Hz and a temperature elevation rate of 3°C/min, of 1000 to 2200 MPa, and a maximum value of a loss tangent (T$\alpha$) of 90°C to 120°C.

Hereinunder one example of an embodiment to which the present invention is applied is described. The numerical value specified in this description is a value determined according to the method disclosed in the embodiment or Examples. A numerical value "A to B" as specified in this description indicates a range satisfying a value A and a value larger than the value A, and a value B and a value smaller than the value B. Fitting with the concept of the present invention, any other embodiment is included in the category of the present invention.

The total haze of the acrylic resin film of the present invention is 0.01 to 1.0%. In this description, the total haze is a haze in the thickness direction of the film, and is determined according to the method described in the section of Examples. When the total haze falls within the above-mentioned range, a print made on one surface of the acrylic resin film of the present invention is clear even when seen from the other surface thereof, and therefore the film can give a deep feel. The total haze of the acrylic resin film of the present invention is preferably 0.01 to 0.5%, more preferably 0.01 to 0.3%. The total haze can be suppressed low by using acrylic multilayer structure polymer particles (A) having a small particle size, by elevating the extrusion temperature and elevating the temperature of a cooling roll for nip reinforcement, or by reducing the refractive index difference between acrylic multilayer structure polymer particles (A) and methacrylic resin (B).

The difference in external haze between both surfaces of the acrylic resin film of the present invention is 0 to 0.5%. In this description, the external haze is a haze occurring on the surface of a film, and in a film having a different surface nature between both surfaces thereof, the individual surfaces each have a different external haze. The external haze can be determined according to the method described in the section of Examples. The difference in external haze in this description is an absolute value of the difference in external haze between both surfaces of a film.

When the external haze difference falls within the above-mentioned range, both surfaces of the acrylic resin film are printable and are excellent in surface smoothness. The external haze difference in the acrylic resin film of the present invention is preferably 0.3 or less, more preferably 0.1 or less. Also preferably, the external haze of at least one surface of the acrylic resin film of the present invention is 0.2% or less, more preferably 0.1% or less. By using acrylic multilayer structure polymer particles (A) having a small particle size, and by elevating the extrusion temperature and elevating the temperature of a cooling roll for nip reinforcement, the external haze and the difference thereof can be controlled.

The storage modulus (E') of the acrylic resin film of the present invention, as measured at 23°C according to dynamic viscoelastometry under the conditions of a sinusoidal vibration of 1 Hz and a temperature elevation rate of 3°C/min, is 1000 to 2200 MPa. When E' falls within the above-mentioned range, the film can have both surface smoothness and flexibility and simultaneously have stiffness. E' of the acrylic resin film of the present invention is preferably 1100 to 1800 MPa, more preferably 1200 to 1600 MPa. By controlling the monomer composition ratio of acrylic multilayer structure polymer particles (A), by controlling the monomer composition ratio of methacrylic resin (B), and by controlling the blending ratio of acrylic multilayer structure polymer particles (A) and methacrylic resin (B), E' can be made to fall within a suitable range.

E' can be determined according to the method described in the section of Examples.

The maximum value of a loss tangent (T$\alpha$) of the acrylic resin film of the present invention is 90°C to 120°C. When T$\alpha$ falls within the range, the balance between the surface smoothness and the surface gloss of the film and the releasability of the melt from the cooling roll is good. T$\alpha$ of the acrylic resin film of the present invention is preferably 95 to 117°C, more preferably 100 to 113°C. By controlling the monomer composition ratio of acrylic multilayer structure polymer particles (A), by controlling the monomer composition ratio of methacrylic resin (B), and by controlling the blending ratio of acrylic multilayer structure polymer particles (A) and methacrylic resin (B), T$\alpha$ can be made to fall within a suitable range.

T$\alpha$ can be determined according to the method described in the section of Examples.

The trouser tear strength (MD) of the acrylic resin film of the present invention is, from the viewpoint of causing few problems of cracking in handling the film, preferably 1.3 N/mm or more, more preferably 1.5 N/mm or more, even more preferably 1.8 N/mm or more. There is no upper limit in the range of the trouser tear strength (MD), but the upper limit is preferably 5.0 N/mm or less.

The acrylic resin film of the present invention contains a (meth)acrylic resin (R).

In this description, the (meth)acrylic resin indicates a methacrylic resin and/or an acrylic resin.

The content of the (meth)acrylic resin (R) in the acrylic resin film of the present invention is preferably 50% by mass or more, more preferably 80% by mass or more, even more preferably 90% by mass or more.

[(Meth)acrylic resin (R)]

Preferably, the (meth)acrylic resin (R) contains acrylic multilayer structure polymer particles (A). Containing acrylic multilayer structure polymer particles (A), the film can have stiffness and flexibility and can be excellent in crack resistance.

Preferably, the lower limit of the glass transition temperature of the (meth)acrylic resin (R) is 60°C, more preferably 65°C, even more preferably 70°C. The upper limit of the glass transition temperature of the (meth)acrylic resin (R) is generally 120°C. The glass transition temperature is a value measured according to JISK7121:2012.

<Acrylic multilayer structure polymer particles (A)>

In the present invention, preferably, the acrylic multilayer structure polymer particles (A) are such that at least one inner layer thereof is a crosslinked elastic polymer layer having an alkyl acrylate monomer unit in which the alkyl group has 1 to 8 carbon atoms and/or a conjugated dienic monomer unit as the main component monomer units, and the outermost layer thereof is a thermoplastic polymer layer having an alkyl methacrylate monomer unit in which the alkyl group has 1 to 8 carbon atoms as a main component monomer unit.

Unless otherwise specifically indicated, in this description, "main component monomer unit" is a monomer unit that accounts for 50% by mass or more.

Examples of the alkyl acrylate in which the alkyl group has 1 to 8 carbon atoms include methyl acrylate, ethyl acrylate, butyl acrylate, 2-ethylhexyl acrylate, propyl acrylate, and methacrylates such as cyclohexyl methacrylate. Among these, methyl acrylate, butyl acrylate and 2-ethylhexyl acrylate are preferred, and butyl acrylate is more preferred.

Examples of the dienic monomer include 1,3-butadiene, and isoprene.

Preferably, the acrylic multilayer structure polymer particles (A) in the present invention are so-called core/shell structure rubber particles where one or plural inner layers including at least one crosslinked elastic polymer layer are coated with an outermost layer of a thermoplastic polymer layer.

The number of the layers of the acrylic multilayer structure polymer particles (A) is not specifically limited, and the particles may be 2-layered, 3-layered, 4-layered or more multilayered ones. From the viewpoint of thermal stability and productivity, the acrylic multilayer structure polymer particles (A) are 3-layered ones is preferably.

In the acrylic multilayer structure polymer particles (A), preferably, the crosslinked elastic polymer layer that constitutes at least one inner layer excluding the outermost layer bonds via a graft bond between the molecular chain in this layer and the molecular chain in the adjacent layer.

The crosslinked elastic polymer layer may contain, in addition to the alkyl acrylate in which the alkyl group has 1 to 8 carbon atoms and/or the dienic polymer, a vinylic monomer copolymerizable with these.

Examples of the copolymerizable vinylic monomer include maleimide compounds such as N-propylmaleimide, N-cyclohexylmaleimide and N-o-chlorophenylmaleimide; and polyfunctional monomers such as ethylene glycol dimethacrylate, propylene glycol dimethacrylate, triethylene glycol dimethacrylate, hexanediol dimethacrylate, ethylene glycol diacrylate, propylene glycol diacrylate, triethylene glycol diacrylate, allyl methacrylate and triallyl isocyanurate.

In this description, "polyfunctional monomer" is a monomer having 2 or more polymerizable functional groups.

From the viewpoint of impact resistance, in the crosslinked elastic polymer layer, the total content of the alkyl acrylate unit in which the alkyl group has 1 to 8 carbon atoms and/or the conjugated dienic monomer unit is preferably 60% by mass or more, more preferably 70% by mass or more, even more preferably 80% by mass or more.

More preferably, the acrylic multilayer structure polymer particles (A) in the present invention are three-layer structure polymer particles composed of three layers of, from the center side of each particle, a first layer of a crosslinked resin layer containing 29.99 to 98.99% by mass, for example, 30 to 98.99% by mass of a methyl methacrylate unit, 1 to 70% by mass of an alkyl acrylate unit in which the alkyl group has 1 to 8 carbon atoms, and 0.01 to 2% by mass of a polyfunctional monomer unit, a second layer of a crosslinked elastic polymer layer containing 69.9 to 99.9% by mass, for example, 70 to 99.9% by mass of an alkyl acrylate unit in which the alkyl group has 1 to 8 carbon atoms, 0 to 30% by mass of a methyl methacrylate unit and 0.1 to 5% by mass of a polyfunctional monomer unit, and a third layer of a hard thermoplastic resin layer containing 70 to 100% by mass of an alkyl methacrylate unit and 0 to 30% by mass of an alkyl acrylate unit in which the alkyl group has 1 to 8 carbon atoms.

In the three-layer structure polymer particles, the proportion of each layer is not specifically limited, but preferably, the first layer accounts for 5 to 40% by mass, the second layer accounts for 20 to 55% by mass, and the third layer (outermost layer) accounts for 40 to 75% by mass.

Examples of the alkyl methacrylate to be used in the thermoplastic polymer layer of the outermost layer include methyl methacrylate, ethyl methacrylate, propyl methacrylate, butyl methacrylate and cyclohexyl methacrylate. The content of the alkyl methacrylate monomer unit in the thermoplastic polymer layer is, from the viewpoint of dispersibility of the acrylic multilayer structure polymer particles (A), preferably 70% by mass or more, more preferably 80% by mass or more.

The particle size of the acrylic multilayer structure polymer particles (A) is not specifically limited, but is preferably 10 to 200 nm. When the particle size is 10 nm or more, the handleability of the acrylic multilayer structure polymer particles (A) is good. When the particle size is 200 nm or less, the acrylic resin film of the present invention can be prevented from being whitened to lower light transmittance when given a stress (to worsen stress whitening resistance). From the viewpoint of the balance between stress whitening resistance and impact resistance, the lower limit of the particle size of the acrylic multilayer structure polymer particles (A) is more preferably 60 nm, even more preferably 70 nm, further more preferably 90 nm, and the upper limit is preferably 150 nm, more preferably 110 nm.

In the production process for the acrylic resin film of the present invention, the non-crosslinked outermost layer of the acrylic multilayer structure polymer particles (A) may melt to form a matrix. In this case, the particle size of the acrylic multilayer structure polymer particles (A) in the film becomes smaller than the particle size of the acrylic multilayer structure polymer particles of the raw material.

In this description, unless otherwise specifically indicated, the particle size of the acrylic multilayer structure polymer particles (A) in the film is a value determined in observation of the cross-sectional surface of each particle in the state existing in the film, using a transmission electron microscope (TEM). The particle size can be determined according to the method described in the section of Examples.

The particle size of the acrylic multilayer structure polymer particles (A) in a latex state can be measured using a laser diffraction/scattering particle size distribution analyzer "LA-300" from Horiba Ltd.

The polymerization method for the acrylic multilayer structure polymer particles (A) is not specifically limited, but an emulsion polymerization method is preferred. First, core particles are prepared by emulsion polymerization of one or more raw material monomers, and then the other one or more monomers are emulsion-polymerized in the presence of the core particles to thereby form a shell around each core particle. Next, as needed, further one or more monomers are emulsion-polymerized in the presence of the core/shell particles to form another shell. Such polymerization reaction is repeated to form the intended acrylic multilayer structure polymer particles (A) as an emulsion latex. In the resultant latex, in general, a linear (meth)acrylic resin having a methyl methacrylate unit may exist, in addition to the crosslinked or grafted acrylic multilayer structure polymer particles, and in this, both the two form the acrylic multilayer structure polymer particles (A) as combined.

The emulsifier for use in emulsion polymerization includes, though not specifically limited thereto, an anionic emulsifier, a nonionic emulsifier and a nonionic/anionic emulsifier. One alone or two or more kinds of these emulsifiers may be used.

The anionic emulsifier includes dialkyl sulfosuccinates such as sodium dioctyl sulfosuccinate, and sodium dilauryl sulfosuccinate; alkylbenzene sulfonates such as sodium dodecylbenzenesulfonate; and alkyl sulfates such as sodium dodecyl sulfate.

The nonionic emulsifier includes polyoxyethylene alkyl ethers, and polyoxyethylene nonylphenyl ethers.

The nonionic/anionic emulsifier includes polyoxyethylene nonylphenyl ether sulfates such as sodium polyoxyethylene nonylphenyl ether sulfate; polyoxyethylene alkyl ether sulfates such as sodium polyoxyethylene alkyl ether sulfate; and alkylether carboxylates such as sodium polyoxyethylene tridecyl ether acetate.

The addition molar number of the oxyethylene units in the exemplified compounds in the nonionic emulsifier or the nonionic/anionic emulsifier is, for the purpose of preventing the foamability of the emulsifier from increasing too much, generally 30 mol or less, preferably 20 mol or less, more preferably 10 mol or less.

The polymerization initiator for use in emulsion polymerization includes, though not specifically limited to, persulfate initiators such as potassium persulfate and ammonium persulfate; and redox initiators such as persulfoxylates/organic peroxides and persulfates/sulfites.

As needed, a chain transfer agent may be used in emulsion polymerization. The chain transfer agent includes alkylmercaptans such as n-octylmercaptan, n-dodecylmercaptan, n-laurylmercaptan, tert-dodecylmercaptan, and sec-butylmercaptan.

In emulsion polymerization for each layer, raw materials of a monomer, an emulsifier, a polymerization initiator and a chain transfer agent may be added to the polymerization reaction system in any known method of a batch addition method, a split addition method or a continuous addition method.

The polymerization reaction temperature for each layer is preferably 30 to 120°C, more preferably 50 to 100°C. The polymerization reaction time for each layer varies depending on the kind and the amount of the polymerization initiator and the emulsifier to be used, and the polymerization temperature, but generally for each layer, the time is 0.5 to 7 hours. The ratio by mass of monomer to water (monomer/water) is preferably 1/20 to 1/1.

As needed, the acrylic multilayer structure polymer particles (A) can be collected as a powdery or the like polymer by processing the polymer latex produced in emulsion polymerization according to a known method of solidification, dewatering and drying. As a method for separating and collecting such a powdery acrylic multilayer structure polymer particles (A), employable are a salting solidification method, a freezing solidification method and a spray drying method. Above all, from the viewpoint of readily removing impurities by washing with water, a salting solidification method and a freezing solidification method are preferred. Prior to the solidification step, preferably, a filtering step is carried out using a wire cloth having an opening of 50 $\mu$m or less, for the purpose of removing impurities mixed in the emulsion.

The acrylic resin film of the present invention may contain 2 or more kinds of acrylic multilayer structure polymers (A).

<Methacrylic resin (B)>

The (meth)acrylic resin (R) may contain a methacrylic resin (B) containing a methyl methacrylate unit in an amount of 80% by mass or more, in addition to the acrylic multilayer structure polymer particles (A). One alone or two or more kinds of methacrylic resin (B) can be used.

Using a methacrylic resin (B) having a good affinity for the acrylic multilayer structure polymer particles (A) and having a refractive index close to that of the particles (A), a (meth)acrylic resin (R) having a high transparency can be obtained, and as a result, a film having a high transparency can be therefore obtained. Using a methacrylic resin (B) containing a linear resin, the workability of the resultant film can be enhanced.

Preferably, the methacrylic resin (B) contains a copolymerizable vinylic monomer unit in an amount of 20% by mass or less, in addition to the methyl methacrylate unit therein. The vinylic monomer is not specifically limited, and includes acrylate monomers such as methyl acrylate, ethyl acrylate, butyl acrylate, propyl acrylate, hexyl acrylate, cyclohexyl acrylate, 2-ethylhexyl acrylate, phenyl acrylate and benzyl acrylate; methacrylates such as ethyl methacrylate, butyl methacrylate, propyl methacrylate, hexyl methacrylate, cyclohexyl methacrylate, phenyl methacrylate and benzyl methacrylate; vinyl acetate; aromatic vinyl compounds such as styrene, p-methylstyrene o-methylstyrene, m-methylstyrene, α-methylstyrene and vinylnaphthalene; nitriles such as acrylonitrile and methacrylonitrile; α,β-unsaturated carboxylic acids such as acrylic acid, methacrylic acid, and crotonic acid; and maleimide compounds such as N-ethylmaleimide, and N-cyclohexylmaleimide. One or two or more kinds of these may be used.

The limiting viscosity of the methacrylic resin (B) is preferably 0.3 to 1.0 dl/g. When the limiting viscosity of the methacrylic resin (B) is 0.3 dl/g or more, tackiness of the (meth)acrylic resin (R) in melt molding can be prevented from lowering. When the limiting viscosity of the methacrylic resin (B) is 1.0 dl/g or less, the fluidity in melt molding can be prevented from lowering.

Though not specifically limited, the content of the methacrylic resin (B) contained in the (meth)acrylic resin (R) is preferably 1 to 50% by mass, more preferably 3 to 35% by mass, even more preferably 5 to 25% by mass, especially more preferably 7 to 15% by mass. When the content of the methacrylic resin (B) is 50% by mass or less, the elastic modulus of the acrylic resin film of the present invention can be prevented from increasing too much, and therefore the film can keep flexibility and can keep stress whitening resistance. On the other hand, when the methacrylic resin (B) is contained in an amount of 1% by mass or more, workability tends to improve.

Examples of the methacrylic resin (B) include commercial products such as "Parapet GF" (MFR: 15 g/10 min (230°C, 37.3 N)), " Parapet EH" (MFR: 1.3 g/10 min (230°C, 37.3 N)), "Parapet HRL" (MFR: 2.0 g/10 min (230°C, 37.3 N)), and "Parapet G" (MFR: 8.0 g/10 min (230°C, 37.3 N)) [all trade names, from Kuraray Corporation), and standard products of ISO8257-1.

The methacrylic resin (B) may be one produced according to a known method of polymerization. The polymerization method for the methacrylic resin (B) includes, though not specifically limited to, an emulsion polymerization method, a suspension polymerization method, a bulk polymerization method and a solution polymerization method.

[Optional components: additives]

The acrylic resin film of the present invention may contain, as needed, one or more optional components within a range not detracting from the object of the present invention, in addition to the above-mentioned components.

The optional components include various additives such as an antioxidant, a thermal degradation inhibitor, a UV absorbent, a light stabilizer, a plasticizer, a lubricant, a release agent, a polymer processing aid, an antistatic agent, a flame retardant, a dyeing pigment, an organic dye, an impact resistance improver, a foaming agent, a filler, and a fluorescent material.

The timing of adding the optional components is not specifically limited, and the components may be added in polymerization for at least one (meth)acrylic resin, or may be added to at least one, polymerized (meth)acrylic resin, or may be added during or after kneading at least one (meth)acrylic resin and, as needed, optional components.

<Antioxidant>

The antioxidant has an effect of preventing oxidative degradation of resin by itself in the presence of oxygen. Examples thereof include a phosphorus-containing antioxidant, a hindered phenol-based antioxidant and a thioether-based antioxidant. An antioxidant that contains a part having an effect of a phosphorus-containing antioxidant and a part having an effect of a hindered phenol-based antioxidant in one and the same molecule can also be used. One or more of these antioxidants may be used. Above all, from the viewpoint of the effect of preventing degradation of optical properties by coloration, a phosphorus-containing antioxidant and a hindered phenol-based antioxidant are preferred, and a hindered phenol-based antioxidant is especially preferred.

The phosphorus-containing antioxidant includes 2,2-methylenebis(4,6-di-t-butylphenyl)octyl phosphite (trade name, Adekastab HP-10 from Adeka Corporation), tris(2,4-di-t-butylphenyl) phosphite (trade name, IRGAFOS 168, from BASF SE), and 3,9-bis(2,6-di-t-butyl-4-methylphenoxy)-2,4,8,10-tetraoxa-3,9-diphosphaspiro[5.5] undecane (trade name, Adekastab PEP-36, from Adeka Corporation).

The hindered phenol-based antioxidant includes pentaerythrityl-tetrakis[3-(3,5-di-t-butyl-4-hydroxyphenyl)propionate] (trade name, IRGANOX 1010, from BASF SE), and octadecyl-3-(3,5-di-t-butyl-4-hydroxyphenyl)propionate (trade name, IRGANOX 1076, from BASF SE); and from the viewpoint of little generation of bleeding out, pentaerythrityl-tetrakis[3-(3,5-di-t-butyl-4-hydroxyphenyl)propionate] (trade name, IRGANOX 1010, from BASF SE) with a high melting point is more preferred.

The antioxidant that contains a part having an effect of a phosphorus-containing antioxidant and a part having an effect of a hindered phenol-based antioxidant in one and the same molecule includes 6-[3-(3-t-butyl-4-hydroxy-5-methyl)propoxyl-2,4,8,10-tetra-t-butyldibenzo[d,f][1,3, 2]-dioxaphosphepin (trade name, Sumilizer GP, from Sumitomo Chemical Company, Ltd.).

The amount of the antioxidant to be added is, from the viewpoint of the oxidative degradation preventing effect and bleeding out which may be caused by the addition, preferably 0.01 to 1 part by mass relative to 100 parts by mass of the (meth)acrylic resin (R), more preferably 0.03 to 0.5 parts by mass, even more preferably 0.05 to 0.3 parts by mass.

<Thermal degradation inhibitor>

The thermal degradation inhibitor can prevent thermal degradation of resin by trapping the polymer radical to form when exposed to high heat under a substantially oxygen-free state. As the thermal degradation inhibitor, 2-t-butyl-6-(3'-t-butyl-5'-methyl-hydroxybenzyl)-4-methylphenyl acrylate (trade name, Sumilizer GM, from Sumitomo Chemical Company, Ltd.), and 2,4-di-t-amyl-6-(3',5'-di-t-amyl-2'-hydroxy-$\alpha$-methylbenzyl)phenyl acrylate (trade name, Sumilizer GS, from Sumitomo Chemical Company, Ltd.) are preferred.

<UV absorbent>

The UV absorbent is a compound having the ability to absorb UV rays. The UV absorbent is a compound that is said to have a function of mainly converting light energy to heat energy. The UV absorbent includes benzophenones, benzotriazoles, triazines, benzoates, salicylates, cyanoacrylates, oxalic acid anilides, malonates, and formamidines. One or more of these may be used. Among the above, benzotriazoles, triazines and UV absorbents having a maximum value of a molar extinction coefficient at a wavelength of 380 to 450 nm, emax of 1200 dm$^3$·mol$^{-1}$cm$^{-1}$ or less are preferred.

Benzotriazoles have a powerful effect of preventing degradation of optical properties by coloration through exposure to UV rays. As such benzotriazoles, 2-(2H-benzotriazol-2-yl)-4-(1,1,3,3-tetramethylbutyl)phenol (trade name, TINUVIN 329, from BASF SE), 2-(2H-benzotriazol-2-yl)-4,6-bis(1-methyl-1-phenylethyl)phenol (trade name, TINUVIN 234, from BASF SE), and 2,2'-methylenebis[6-(2H-benzotriazol-2-yl)4-tert-octylphenol] (LA-31, from Adeka Corporation) are preferred.

UV absorbents of triazines are preferably used in the case where long-term lightfastness is required, and exhibit a long-term UV-preventing effect with little decomposition by light. Triazines include 2,4,6-tris(2-hydroxy-4-hexyloxy-3-methylphenyl)-1,3,5-triazine (LA-F70, from Adeka Corporation), and analogues thereof, hydroxyphenyltriazine-based UV absorbents (TINUVIN 477-D, TINUVIN 460, TINUVIN 479, TINUVIN 1600, from BASF SE), and biphenyl-type TINUVIN 479, and TINUVIN 1600 are especially preferred.

UV absorbents of triazines are excellent in lightfastness but are expensive, and therefore when considered along with economic efficiency, combination use of benzotriazoles and triazines is preferred. The ratio by weight of benzotriazoles/triazines is preferably 90/10 to 10/90, more preferably 70/30 to 30/70.

The amount of the UV absorbent to be added varies depending on the required lightfastness, and in the case where long-term durability is desired, the amount is, from the viewpoint of the lightfastness effect and bleeding out which may be caused by the addition and is problematic, preferably 0.1 to 5 parts by mass relative to 100 parts by mass of the (meth)acrylic resin (R), more preferably 0.5 to 3.5 parts by mass, even more preferably 1 to 2.5 parts by mass.

<Light stabilizer>

The light stabilizer is a compound that is said to have a function of mainly trapping a radical to form in oxidation by light. As the light stabilizer, any known one can be used, and preferred light stabilizers include hindered amines such as a compound having a 2,2,6,6-tetraalkyl-piperidine skeleton. As such light stabilizers, commercial products such as Adekastab LA-57, Adekastab LA-68, and Adekastab LA-77 are usable. Above all, light stabilizers having a melting point of 100°C or higher are preferred, and Adekastab LA-57 is preferably used.

The amount of the light stabilizer to be added is, from the viewpoint of lightfastness and bleeding out, preferably 0.01 to 5 parts by mass relative to 100 parts by mass of the (meth)acrylic resin (R), more preferably 0.05 to 1 part by mass, even more preferably 0.1 to 0.5 parts by mass.

<Lubricant>

The lubricant includes stearic acid, behenic acid, stearoamidic acid, methylenebis-stearoamide, hydroxystearic acid triglyceride, paraffin wax, ketone wax, octyl alcohol, and hardened oil. One or more of these may be used.

<Release agent>

The release agent includes higher alcohols such as cetyl alcohol, and stearyl alcohol; and glycerin higher fatty acid esters such as stearic acid monoglyceride, and stearic acid diglyceride. One or more of these may be used. In particular, combined use of higher alcohols and glycerin fatty acid monoesters is preferred. In the case of combined use of higher alcohols and glycerin fatty acid monoesters, the ratio thereof is not specifically limited, but is preferably such that a ratio by mass of higher alcohols/glycerin fatty acid monoesters is 2.5/1 to 3.5/1, more preferably 2.8/1 to 3.2/1.

<Polymer processing aid>

As the polymer processing aid, for example, polymer particles are used which are produced by an emulsion polymerization method and which are composed of 60% by mass or more of a methyl methacrylate unit and 40% by mass or less of a vinylic monomer unit copolymerizable with the methyl methacrylate unit and have an average polymerization degree of 3,000 to 40,000 and a particle size of 0.05 to 0.5 $\mu$m. The polymer particles may be a monolayer particles of a polymer having a single composition and a single limiting viscosity, or a multilayer particles of 2 or more kinds of polymers differing in the composition or the limiting viscosity. In particular, 2-layered particles are preferred, having, as the inner layer, a polymer layer having a relatively low limiting viscosity and having, as the outer layer, a polymer layer having a relatively high limiting viscosity of 5 dl/g or more. Preferably, the polymer processing aid has a limiting viscosity of 3 to 6 dl/g. Having a limiting viscosity falls within the range, the agent betters film formability. Specifically, examples thereof include Metablen-P series from Mitsubishi Rayon Co., Ltd., and Paraloid series from Rohm and Haas Corporation, Dow Chemical Company and Kureha Corporation. The content of the polymer processing aid to be mixed in the acrylic resin film of the present invention is preferably 0.1 to 5 parts by mass relative to 100 parts by mass of the (meth)acrylic resin (R). When the content of the polymer processing aid is 0.1 parts by mass or more, the moldability is good, and when the content is 5 parts by mass or less, the melt flowability is good. The content of the polymer processing aid is more preferably 0.5 to 3 parts by mass, even more preferably 1 to 2 parts by mass.

<Organic dye>

The organic dye for use herein is preferably a compound having a function to convert UV rays into visible rays.

<Fluorescent material>

The fluorescent material includes a fluorescent pigment, a fluorescent dye, a fluorescent white dye, a fluorescent brightening agent, and a fluorescent bleaching agent. One or more of these may be used.

The total content of the above-mentioned additives is not specifically limited, but is preferably 0.01 to 20% by mass in 100% by mass of the acrylic resin film, more preferably 0.1 to 10% by mass, even more preferably 1 to 5% by mass. Preferably, the acrylic resin film of the present invention does not contain fine particles of a delustering agent or a light diffusing agent, from the viewpoint of suppressing the total haze thereof to be low.

[Film molding]

A molding method for the acrylic resin film of the present invention includes an extrusion molding method, a solution casting method, a melt casting method, an inflation molding method and a blow molding method. Above all, an extrusion molding method is preferred, and more preferred is an extrusion molding method that includes a step of melt-extruding a (meth)acrylic resin (R) (composition) in a film-like shape through a T-die, and a step of holding the extruded melt in a film-like shape (hereinbelow may be simply referred to as "melt") between a pair of cooling rolls, one metal rigid roll and the other metal elastic roll. According to the extrusion molding method, film formability is good, and occurrence of film roughness, thickness unevenness and streak formation can be prevented, and a film having high transparency, high thickness evenness and good surface smoothness can be produced at a relatively high productivity.

Hereinunder the extrusion molding method is described with reference to Fig. 1.

<Extruder with T-die, roll>

In the extrusion molding method, an extruder with a T-die is preferably used. The extruder with a T-die is equipped with at least a raw material input part (111) such as a hopper into which a (meth)acrylic resin (R) (210M) is inputted, a screw part (112) where the inputted (meth)acrylic resin (R) (210M) is heated and melted and fed toward a T-die side, :and a T-die (113) through which the heated and melted (meth)acrylic resin (R) (210M) is extruded out in a film-like shape.

In the extruder with a T-die, preferably, the molten resin is quantitatively fed to the T-die via a gear pump (110). With that, a film having a high thickness accuracy can be produced.

Also preferably, the molten resin is filtered through a polymer filter or the like to remove impurities, and then fed to the T-die (113). The preset temperature of the extruder with a T-die is not specifically limited, and can be set in accordance with the composition of the (meth)acrylic resin (R), and is preferably 160 to 280°C, more preferably 220 to 275°C, even more preferably 250 to 270°C. The preset temperature of the extruder with a T-die is the melting temperature (processing temperature) for the (meth)acrylic resin (R).

The (meth)acrylic resin (R) that has been in a molten state at the above-mentioned temperature is extruded out in a film-like shape in the vertical downward direction through the discharge port (113A) of the T-die. The temperature distribution in the T-die (113) is preferably ±15°C or less, more preferably ±5°C or less, even more preferably ±1°C or less. The temperature distribution of the T-die falling within a range of ±15°C is preferred, since the molten resin can be prevented from having viscosity unevenness, and since the resultant film can be prevented from being strained owing to thickness unevenness and stress unevenness.

A cooling method for the melt extruded out through the T-die (113) includes a nip roll method, a static electricity application method, an air knife method, a calender method, a one-side belt method, a double-side belt method, and a three-roll method, and an a nip roll method is more preferred.

In a nip roll method, the melt extruded out through the T-die (113) is pressed and cooled in a cooling roll unit (120) including plural cooling rolls (nip rolls) arranged to be adjacent to each other via a separating space therebetween corresponding to the desired thickness of the acrylic resin film to be produced.

Hereinunder in the cooling roll unit, an n-th (n is an integer of 1 or more) cooling roll from the upstream side is referred to as "an n-th cooling roll". The cooling roll unit includes at least a first cooling roll (121) and a second cooling roll (122) having a separating space therebetween in the downward direction of the discharge port of the T-die. The number of the cooling rolls is 2 or more, and is preferably 3 to 4.

The melt extruded out via the T-die is, while held between the first cooling roll (121) and the second cooling roll (122), pressed and cooled to be an acrylic resin film (210) of the present invention. The acrylic resin film (210) produced according to the above-mentioned method is not sufficiently cooled by only the cooling roll unit, and even at the time when the film leaves from the downstream-most cooling roll, in general, the film is not as yet completely solidified. After having left from the downstream-most cooling roll, the acrylic resin film (210) is further cooled while running further downstream.

As described above, in the production method for the acrylic resin film of the present invention, preferably, the first cooling roll (121) and the second cooling roll (122) are metal rigid rolls or metal elastic rolls, and more preferably, at least any one thereof is a metal elastic roll.

Using a metal elastic roll having a smooth surface, preferably a mirror surface, both film surfaces can be made to have a high gloss at room temperature and have good printability.

As compared with a metal rigid roll and a metal elastic roll, a non-metallic roll such as a rubber roll has a low surface smoothness and can hardly provide a high-gloss film surface.

The metal elastic roll is a metal roll whose surface is elastic and deformable during film production. The surface of the metal elastic roll is a smooth surface and is preferably a mirror surface. As the metal elastic roll, a known metal elastic roll generally used in extrusion molding is usable, and for example, herein usable is a double-structure metal elastic roll, which contains an inner roll formed of a metallic hollow roll and a metallic outer cylinder whose surface is smooth and and is elastic and deformable during film production, and in which a cooling fluid can run inside the inner roll and/or between the inner roll and the outer cylinder. Between the inner roll and the outer cylinder, rubber or any arbitrary fluid not for cooling may be made to exist. The thickness of the outer cylinder may be sufficiently thin so as to be elastic and deformable without being broken during film production and is, for example, 2 to 8 mm or so. Preferably, the outer cylinder has a seamless structure not having a welded seam. The material for the inner roll and the outer cylinder is not specifically limited, and includes stainless steel and chromium steel.

At least one of the first cooling roll (121) and the second cooling roll (122) is preferably so designed that the outer diameter at both roll ends is smaller than the outer diameter of the roll center part. In this case, the height difference between both roll ends and the roll center part formed on the outer peripheral surface is preferably 0.5 to 1.0 mm. When at least one cooling roll has such a height difference formed on the outer peripheral surface thereof, the thickness at both ends of the resultant film can be made somewhat larger than that at the center part thereof, therefore preventing cutting breakage from both ends to lower productivity. The shape of the height difference is not specifically limited, and may be any of a vertical, tapered or step-like shape. Both ends of the film that are made to be somewhat thicker than the center part thereof can be cut off in a later step, as needed. The height difference can be determined by measuring the outer periphery of the roll at each site and calculating the difference between the resultant data.

The linear pressure given to the melt by the first cooling roll (121) and the second cooling roll (122) is not specifically limited but is, from the viewpoint of uniformly pressing the melt, preferably 5 kg/cm or more, more preferably 10 kg/cm or more, even more preferably 15 kg/cm or more. The upper limit of the linear pressure given to the melt by the first cooling roll (121) and the second cooling roll (122) is not specifically limited and is 50 kg/cm or so from the viewpoint that the cooling rolls are elastic and deformable and film cutting breakage can be prevented.

[Acrylic resin film]

The acrylic resin film of the present invention may be an unstretched film, or may be a stretched film. In this description, unless otherwise specifically indicated, a film means an unstretched film. Hereinunder "acrylic resin film" may be expressed as "acrylic film" or "film".

In general, one having a thickness of 5 to 250 $\mu$m is grouped in "film", and one having a thickness of more than 250 $\mu$m is grouped in "sheet", but in this description, film and sheet are not distinctively differentiated, and the two are referred to as "film" altogether.

The thickness of the acrylic resin film of the present invention is not specifically limited.

The thickness of the unstretched acrylic resin film (unstretched film) produced according to the above-mentioned production method is preferably 10 to 500 $\mu$m, more preferably 30 to 400 $\mu$m, even more preferably 40 to 120 $\mu$m, and especially more preferably 50 to 80 $\mu$m. The film having a thickness of 10 $\mu$m or more is easy to produce. The film having a thickness of 500 $\mu$m or less is excellent in secondary workability for lamination, handling, cutting and blanking, and can reduce the material cost per unit area thereof.

The surface roughness of both surfaces of the acrylic resin film of the present invention is preferably 1 to 50 nm, more preferably 10 to 47 nm, even more preferably 25 to 45 nm. By controlling the amount and the particle size of the acrylic multilayer structure polymer particles (A) and by controlling the film formation condition, the surface roughness of both surfaces of the film can be controlled.

The surface roughness can be determined according to the method described in the section of Examples.

Preferably, the acrylic resin film of the present invention contains the acrylic multilayer structure polymer particles (A) in an amount of 65 to 100% by mass as the content thereof in the composition for the film, more preferably 75 to 97% by mass, even more preferably 85 to 95% by mass.

Preferably, the acrylic resin film of the present invention contains an acetone insoluble in an amount of 30 to 80% by mass, more preferably 40 to 70% by mass, even more preferably 50 to 60% by mass.

The acetone insoluble content can be determined according to the following method, using acetone.

The film is fully dried to remove water, and the mass (W1) thereof is measured. Next, the film is put into a test tube, dissolved in acetone added thereto, and the acetone soluble is removed. Subsequently, using a vacuum heating drier, acetone is removed, and the mass (W2) of the resultant residue is measured. According to the following expression, the acetone insoluble content is calculated.

$$[\text{Acetone insoluble content}] = (W2/W1) \times 100 \ (\%)$$

The acrylic resin film of the present invention is excellent in resistance to whitening under heat and in resistance to whitening under impact.

<Stretched film>

The acrylic resin film of the present invention may be a stretched film. Specifically, the above-mentioned unstretched film may be stretched to be a stretched film. Stretching treatment increases a mechanical strength, therefore giving a film that is hardly cracked. The stretching method is not specifically limited, and includes a simultaneous biaxial stretching method, a successive biaxial stretching method, and a tubular stretching method. From the viewpoint that uniform stretching can be carried out to give a high-strength film, the lower limit of the stretching temperature is preferably a temperature higher by 10°C than the glass transition temperature (Tg) of the (meth)acrylic resin (R), and the upper limit of the stretching temperature is preferably a temperature higher by 40°C than the glass transition temperature (Tg) of the (meth)acrylic resin (R).

The present invention also includes a printed resin film, a film for decoration, a film for construction, a laminated film and a laminated body using the acrylic resin film of the present invention.

<Printed resin film>

The printed resin film of the present invention is one in which printing is performed on at least one surface of the acrylic resin film of the present invention. In general, printing is performed on any one surface of the acrylic resin film of the present invention. At room temperature, both surfaces of the acrylic resin film of the present invention are excellent in surface smoothness, and therefore, a spot which misses being printed is prevented and a printed resin film having a good print appearance can be provided.

The printing method is not specifically limited, and any known printing method is employable, including a gravure printing method, a flexographic printing method, and a silk screen printing method.

In the case where the printed resin film of the present invention is laminated on a substrate, preferably, the film is so laminated that the printed surface thereof could be in contact with the substrate from the viewpoint of protecting the printed surface and giving a high-quality feeling.

<Laminated film>

The laminated film of the present invention is a film having plural layers including at least one of the acrylic resin film of the present invention, the printed resin film of the present invention, the film for decoration of the present invention and the film for construction of the present invention and, for example, one or more of a film having a functional layer as described below, and a film of a thermoplastic resin such as a carbonate resin, a vinyl chloride resin, a vinylidene fluoride resin, a (meth)acrylic resin, an ABS resin, an AES resin or a PVB resin are laminated.

The functional layer includes a hard coat layer, an antiglare layer, an antireflection layer, an anti-sticking layer, a diffusing layer, an antidazzle layer, an antistatic layer, an antifouling layer and a lubricative layer containing fine particles.

A production method for the laminated film of the present invention is not specifically limited.

A production method for a laminated film containing the acrylic resin film of the present invention includes:

(1) A method of melt-coextruding a raw material resin composition for the acrylic resin film of the present invention and any other thermoplastic resin (composition) to produce a laminated film;

(2) A method of previously preparing a film of any one of the raw material resin composition for the acrylic resin film of the present invention and the other thermoplastic resin (composition), and then melt-extruding the other thereof onto the resultant film to coat it to produce a laminated film;

(3) A method of previously preparing films from both of the raw material resin composition for the acrylic resin film of the present invention and the other thermoplastic resin (composition), and bonding these by hot pressing; and

(4) A method of previously preparing a film of the raw material resin composition for the acrylic resin film of the present invention, and polymerizing a polymerizing composition on the resultant film to produce a laminated film.

The laminated film produced according to the method of the above-mentioned (1) to (4) may be a laminated film that contains the printed resin film of the present invention by performing printing on the exposed surface of the acrylic resin film of the present invention.

<Laminated body>

The laminated body of the present invention is one produced by laminating, on a substrate, the acrylic resin film of the present invention, the printed resin film of the present invention, the film for decoration of the present invention, the film for construction of the present invention or the laminated film of the present invention. By laminating the film of the present invention on a substrate, the decorative appearance of the substrate can be enhanced. Another advantage is that the substrate is protected.

The material of the substrate is not specifically limited, including resin, steel, wood, glass and composite materials thereof. The resin for use for the substrate is not specifically limited, and may be a thermoplastic resin or a thermosetting resin. The thermoplastic resin for use for the substrate includes a carbonate resin, an ethylene terephthalate resin, an amide resin, an olefin resin, a styrene resin, a vinyl chloride resin, a (meth)acrylic resin, and an ABS resin. The thermosetting resin for use for the substrate includes an epoxy resin, a phenolic resin, and a melamine resin.

A production method for the laminated body of the present invention is not specifically limited, including bonding, lamination, insert molding, and in-mold formation.

In the case where the material of the substrate is a resin, preferred is a vacuum forming, pressure forming or compression molding method of molding the acrylic resin film of the present invention on the surface of the substrate under heating. Above all, an injection-molding and simultaneous lamination method is preferred. The injection-molding and simultaneous lamination method is a method of inserting the acrylic resin film of the present invention between a pair of male and female molds for injection molding, and then injection-molding a molten thermoplastic resin between the molds (on one surface of the film). According to this method, production of an injection-molded body and lamination of a film thereon can be carried out simultaneously.

The film to be inserted into the mold may be flat or may have an uneven shape pre-formed by vacuum forming or pressure forming. Film pre-forming may be carried out using a separate molding machine or may be carried out in the mold of an injection-molding machine to be used in an injection-molding and simultaneous lamination method. The method of injecting a molten resin onto one surface of the film prepared by pre-forming is referred to as an insert molding method.

In the case where the material of the substrate is a resin, also employable is a co-extrusion molding method of co-extruding the substrate and the film to be laminated thereon.

Further, a coating layer that may cure through irradiation with ultraviolet rays (UV) or electron beams (EB) may be formed on the film of the present invention laminated on the substrate. In this case, the decorative appearance or the substrate protection can be further enhanced.

Industrial Applicability

Use of the acrylic resin film of the present invention and the laminated body of the present invention is not specifically limited, and the film and the laminated body can be favorably used in various applications that require decorative appearance, and for example, favorably for use for decoration and for use for construction.

Specific use applications include interior members such as furniture, pendant lights and mirrors; and construction members such as doors, domes, security windowpanes, partitions, stair waist panels, balcony waist panels, and roofs for leisure buildings.

Other use applications include signboard parts or marking films for advertising towers, stand signboards, projecting signs, transom signs and rooftop billboards; display parts for showcases, partitions and shop displays; lighting components such as fluorescent lamp covers, mood lighting covers, lamp shades, luminous ceilings, luminous walls, and chandeliers; transportation-related parts such as airplane windshields, pilot visors, motorcycle windshields, motorboat windshields, bus sun visors, automobile side visors, rear visors, head wings, headlight covers, automobile interior parts, and automobile exterior parts such as bumpers; electronic equipment parts such as acoustic imaging nameplates, stereo covers, TV protection masks, vending machines, portable telephones, and personal computers; medical equipment parts such as infant incubators and X-ray imaging parts; equipment-related parts such as machine covers, meter covers, experiment devices, rulers, dial faces, and observation doors; solar cell-related parts such as solar cell back films, and flexible solar cell front films; various household electronics; traffic-related parts such as traffic signs, information boards, curve mirrors, and acoustic barriers; decorative films functioning also as protective films to be provided on surfaces of greenhouses, large-scale water tanks, box-type water tanks, clock panels, bathroom members such as bathtubs, sanitary goods, desk mats, game parts, toys, wallpapers, and face protective masks in welding.

Examples

Hereinunder the present invention is described more specifically by showing Examples and Comparative Examples, but the present invention is not whatsoever restricted by these Examples. In the following description, unless otherwise specifically indicated, "part" is "part by mass".

(Thickness)

The thickness at each of the center part and the positions of 100 mm from both ends of the film produced in Examples and Comparative Examples was measured with a micrometer, and the average value of the data is referred to as the film thickness.

[Total haze]

The total haze of the film to be analyzed was measured with a haze meter (trade name, "HM-150", from Murakami Color Research Laboratory Co., Ltd.), according to JIS K 7136:2000.

(Internal haze)

Two transparent resin films for measurement assistance were prepared, whose thickness is on the same level as that of the film to be analyzed and whose haze is 0.2 or less. For removing the influence of surface roughness of the film to be analyzed, both surfaces of the film to be analyzed were wetted with water drops, and then the film for measurement assistance was airtightly attached to each surface of the film to be analyzed. In that state, the haze was measured according to JIS K 7136:2000, and the resultant value is referred to as the internal haze of the film to be analyzed.

(External haze difference)

The same and one transparent film for measurement assistance as that used for measurement of the internal haze was prepared. One surface of the film to be analyzed was wetted with water drops, and then the film for measurement assistance was airtightly attached thereto. (For convenience sake, the surface wetted with water drops is referred to as surface A, and the other surface is as surface B.) In that state, the haze (haze b) was measured according to JIS K 7136:2000, and the haze of the surface (surface A) wetted with water drops was determined according to the following expression.

$$(\text{Haze of surface A}) = (\text{total haze}) - (\text{haze b})$$

The same operation was carried out also on the other surface.

An absolute value of the external haze difference between both surfaces is referred to as an external haze difference.

(Storage modulus (E'))

Using a dynamic viscoelastometer from UBM Corporation (DVE-V4 FT Rheo Spectoler), the storage modulus of each film was measured under the conditions of a sinusoidal vibration (frequency) of 1 Hz and a temperature elevation rate of 3°C/min.

(Maximum value of loss tangent ($T\alpha$))

In measurement under the conditions of a sinusoidal vibration (frequency) of 1 Hz at 3°C/min for the above-mentioned dynamic viscoelastometry, the temperature for the maximum value in the temperature variance spectrum of the loss tangent is referred to as $T\alpha$.

(Film printability)

The film to be analyzed was set on a gravure printing machine, and both surfaces of the film (for convenience sake, surface A and surface B) were printed each individually with letters and design patterns. The prints were visually checked, and the printability was evaluated according to the following evaluation criteria.

<Evaluation criteria>

A (good): No spot which misses being printed is observed.
B (acceptable): Spots which miss being printed are slightly observed.
C (not good): Spots which miss being printed are observed.

(Surface roughness)

The film to be analyzed was cut into a test piece of 5 mm $\times$ 5 mm. Using an atomic force microscope (SPI 4000 Probe Station E-Sweep Environmental Control Unit, from SII NanoTechnology Inc.), the surface profile of the test piece was determined in a DFM mode. As the probe, used was SI-DF20 (back surface Al) from SII NanoTechnology Inc. Prior to sample measurement, a control sample having a pitch of 10 $\mu$m and a height level of 100 nm was measured, and it was confirmed that the measurement error on the X-axis and the Y-axis of the device was 5% or less relative to 10 $\mu$m, and the error on the Z-axis was 5% or less relative to 100 nm.

The observed area of the sample was 5 $\mu$m $\times$ 5 $\mu$m, and the measurement frequency was 0.5 Hz. The number of scanning lines was 512 on the X-axis and 512 on the Y-axis. The measurement was carried out in an air environment at 25°C $\pm$ 2°C and a humidity of 30 $\pm$ 5%. The resultant measurement data were processed with the data processing software attached to the device to determine the average surface roughness Ra. Specifically, the "3D inclination correcting" command in the "tool" menu of the measurement software of the device is selected, then the film inclination and the entire inclination of large wave are corrected, the "surface roughness analysis" command of the "analysis" menu is selected, and the average surface roughness Ra is determined. The average surface roughness Ra is a value determined by averaging the absolute values of deviation from the reference surface to the designated surface, and is defined by the following expression.

$$Ra = \frac{1}{S_0} \int_X \int_Y \left| F(X, Y) - Z_0 \right| dX dY$$

wherein F (X, Y) represents a value of the height of the (X, Y) coordinates. $Z_0$ represents an average value of the Z data defined by the following.

$$Z_0 = \frac{1}{S_0} \int_X \int_Y F(X, Y) dX dY$$

So represents an area of the measurement field.

The average surface roughness Ra was measured in different 10 sites on both surfaces (for convenience sake, surface A and surface B) of the film, and an average value of the average surface roughness Ra at 10 sites is referred to a surface roughness of the film. The 3D inclination correction was carried out by fitting the measured sample surface according to least mean square approximation with a 3D curved surface, and this was carried out for excluding the influences of inclination and wave of the film sample.

(Particle size in latex state)

A laser diffraction/scattering particle size distribution analyzer "LA-300" from Horiba Ltd. was used for the measurement.

(Particle size in film)

A part of the film was cut out, and cut in the thickness direction using a microtome under a freezing condition, the resultant section was stained with an aqueous phosphotungstic acid solution, the cross section of the stained rubber particles was observed with a 1,000,000-power TEM to measure the major diameter of 50 rubber particles existing in the viewing field, and a number-average value of the resultant data is referred to as a particle size.

(Acetone insoluble content)

The film was fully dried to remove water, and then the mass (W1) thereof was measured. Next, the film was put into a test tube, dissolved in acetone added thereto, and the acetone soluble was removed. Subsequently, using a vacuum heating drier, acetone was removed, and the mass (W2) of the resultant residue was measured. According to the following expression, the acetone insoluble content was calculated.

$$[\text{Acetone insoluble content}] = (W2/W1) \times 100 \ (\%)$$

(Weather resistance)

The film was set on Eye Super UV Tester (SUV-W161) from Iwasaki Electric Co., Ltd., under the condition of a temperature of 60°C and a humidity of 50%, taken out at intervals of 50 hours, and the transmission spectrum of the film was measured. The time for which the 315-nm transmission spectrum was kept at a value of 50% or less was taken as an index of weather resistance.

(Resistance to whitening under heat)

A test piece of 50 mm × 50 mm was cut out of the film, and the haze (before heating) thereof was measured according to JIS K7136:2000, and then the test piece was left in an oven at 80°C for 10 minutes. The test piece was taken out of the oven, and the haze (after heating) thereof was measured using a haze meter (Haze Meter HM-150 from Murakami Color Research Laboratory Co., Ltd.),according to JIS K7136:2000 and evaluated according to the following evaluation criteria. Here, haze change is represented by the following expression.

$$\text{Haze change} = \text{haze (after heating)} - \text{haze (before heating)}$$

A: The haze change is 0.1% or less.
B: The haze change is more than 0.1%.

(Resistance to whitening under impact)

Using a DuPont impact tester, a 1-kg weight was dropped down from a height of 500 mm onto a laminated film prepared by bonding the film to a black vinyl chloride steel plate by thermal pressing at 180°C for 30 seconds under a pressure of 20 kg/cm$^2$, and the whitening condition of the film was checked for evaluation.

A: Not whitened.
B: Whitened a little.
C: Whitened.

(Trouser tear strength)

According to JIS K7128-1:1998, the test piece of the film was cut out in the machine direction (MD), and a slit was given thereto so that the film could tear in the same direction as the machine direction, and the film was evaluated (test speed: 200 mm/min).

(Production Example 1) Polymerization for acrylic multilayer structure polymer particles (A-1)

(1) In a reactor equipped with a stirrer, a thermometer, a nitrogen gas introducing part, a monomer introducing duct and a reflux condenser, 200 parts of deionized water, 1 part of sodium dodecylbenzenesulfonate and 0.05 parts of sodium carbonate were put, then the reactor was fully purged with a nitrogen gas so that substantially no oxygen could exist therein, and thereafter the inner temperature was set at 80°C. 0.01 parts of potassium persulfate was put thereinto, followed by stirring for 5 minutes, and then a monomer mixture containing 9.48 parts of methyl methacrylate, 0.5 parts of n-butyl acrylate and 0.02 parts of allyl methacrylate was continuously and dropwise added thereto, taking 20 minutes, and after the addition, the polymerization reaction was carried out for further 30 minutes so that the polymerization degree could be 98% or more.
(2) Next, in the same reactor, 0.03 parts of potassium persulfate was put, followed by stirring for 5 minutes, and a monomer mixture containing 1.45 parts of methyl methacrylate, 27.67 parts of n-butyl acrylate and 0.88 parts of allyl methacrylate was continuously and dropwise added thereto, taking 40 minutes. After the addition, the polymerization reaction was carried out for further 30 minutes so that the polymerization degree could be 98% or more.
(3) Next, in the same reactor, 0.06 parts of potassium persulfate was put and followed by stirring for 5 minutes, and then a monomer mixture containing 53.73 parts of methyl methacrylate, 5.97 parts of n-butyl acrylate and 0.3 parts of n-octylmercaptan (chain transfer agent) was continuously and dropwise added thereto, taking 100 minutes, and after the addition, the polymerization reaction was carried out for further 60 minutes so that the polymerization degree could be 98% or more to give a latex containing acrylic multilayer structure polymer particles (A-1). The average particle size in the latex state was 100 nm.

Subsequently, the latex containing acrylic multilayer structure polymer particles (A-1) was frozen at -30°C, taking 4 hours. The frozen latex was put into a double amount of hot water at 80°C, and dissolved therein to obtain a slurry, and the slurry was hold at 80°C for 20 minutes, then dewatered, and dried at 70°C.

(Production Examples 2, 3) Polymerization for acrylic multilayer structure polymer particles (A-2, A-3)

Acrylic multilayer structure polymer particles (A-2) having a particle size of 80 nm and acrylic multilayer structure polymer particles (A-3) having a particle size of 200 nm were produced by controlling the charged amounts of sodium dodecylbenzenesulfonate and sodium carbonate.

The other methacrylic resin (B), UV absorbent, light stabilizer and antioxidant used are described below.

[Methacrylic resin (B-1)] Parapet EH from Kuraray Co., Ltd. (MFR: 1.3 g/10 min (230°C, 37.3 N))
[Methacrylic resin (B-2)] Parapet HRS from Kuraray Co., Ltd. (MFR: 2.4 g/10 min (230°C, 37.3 N))
[UV absorbent (LA-31RG)] Adekastab LA-31RG from Adeka Corporation
[UV absorbent (Tinuvin 1600)] TINUVIN 1600 from BASF SE
[Light stabilizer] Adekastab LA-57 from Adeka Corporation
[Antioxidant (Irg 1010)] IRGANOX 1010 from BASF SE
[Antioxidant (Irg 1076)] IRGANOX 1076 from BASF SE

(Example 1)

As raw materials, the acrylic multilayer structure polymer particles (A-1) produced in Production Example 1, and a methacrylic resin (B), a UV absorbent and an antioxidant were melt-kneaded in the formulation shown in Table 1, using a 58-φ twin-screw kneading extruder (TEM-58SS from Toshiba Machine Co., Ltd.) having 2 kneading zone therein, at a barrel preset temperature of 230°C to give a (meth)acrylic resin (R).

The resultant (meth)acrylic resin (R) was melt-extruded under the following conditions, using a single-screw vent extruder with a T-die.

Preset temperature of extruder (temperature from extruder to T-die, melting temperature of resin composition): 265°C
Screw diameter: 75 mm
T-die width: 1850 mm
T-die lip aperture: 0.8 mm
Discharge speed of molten resin from T-die: 110 kg/h

Next, the film-like extruded melt was cooled under pressure using a cooling roll unit composed of first to fourth cooling rolls (nip rolls). As the first cooling roll (hereinafter may be abbreviated as "first roll"), a metal elastic roll having a controlled temperature of 60°C was used; and as the second cooling roll (hereinafter may be abbreviated as "second roll"), a metal rigid roll having a controlled temperature of 75°C was used. As the third cooling roll, a metal rigid roll having a controlled temperature of 70°C was used; and as the fourth cooling roll, a metal rigid roll having a controlled temperature of 65°C was used. All cooling rolls have a mirror surface. The linear pressure between the first cooling roll and the second cooling roll was 30 kg/cm. The melt was cooled under pressure in the cooling roll unit, and then processed in the same manner as in a known method to give an unstretched thermoplastic resin film having a thickness of 55 $\mu$m. The resultant acrylic resin film was evaluated variously. Main production conditions and the evaluation results are shown in Table 1.

(Examples 2 to 6, Comparative Examples 1, 2)

In the same manner as in Example 1 except that the formulation of the raw material mixture and the production conditions were as in Table 1, acrylic resin films were produced. Main production conditions and the evaluation results are shown in Table 1.

Table 1

| [Formulation] | | Example 1 | Example 2 | Example 3 | Example 4 | Example 5 | Example 6 | Comparative Example 1 | Comparative Example 2 |
|---|---|---|---|---|---|---|---|---|---|
| Acrylic multilayer structure polymer particles (A) | | | | | | | | | |
| A-1 (average particle size: 100 nm) | part by mass | 90 | 80 | 70 | 80 | | | | 95 |
| A-2 (average particle size: 80 nm) | part by mass | | | | | 100 | 85 | | |
| A-3 (average particle size: 200 nm) | part by mass | | | | | | | 30 | |
| Methacrylic resin (B) | | | | | | | | | |
| B-1 | part by mass | 10 | 20 | 30 | 20 | 0 | 15 | | |
| B-2 | part by mass | | | | | | | 70 | 5 |
| UV absorbent | | | | | | | | | |
| LA31RG | part by mass | 1 | 3 | 2 | 2 | 2 | 2 | 2 | 1 |
| TINUVIN 1600 | part by mass | 0.75 | | | | | | | 0.75 |
| Light stabilizer | | | | | | | | | |
| LA57 | part by mass | | | | | | 0.3 | | |
| Antioxidant | | | | | | | | | |
| Irg1010 | part by mass | 0.1 | | | 0.1 | | | | 0.1 |
| Irg1076 | part by mass | | | | | | 0.1 | | |

EP 3 733 744 A1

| [Production method] | | | | | | | | | |
|---|---|---|---|---|---|---|---|---|---|
| Extrusion method | | T-die | T-die | T-die | T-die | T-die | T-die | T-die | T-die |
| Preset temperature of extruder | °C | 265 | 265 | 265 | 265 | 265 | 265 | 270 | 265 |
| Surface profiling method | | elastic/ rigid nip | elastic/ rigid nip | elastic/ rigid nip | elastic/ rigid nip | cast | cast | elastic/ rigid nip | cast |
| Roll temperature (first roll/ second roll/third roll/fourth roll) | °C | 60/75/70/65 | 55/70/65/60 | 58/72/65/60 | 65/70/65/60 | 70/65/60 | 70/65/60 | 90/92/90/80 | 50/45/40 |
| [Film] | | | | | | | | | |
| Storage modulus (E') (23°C) | MPa | 1530 | 1740 | 1980 | 1750 | 1620 | 1650 | 2360 | 1260 |
| Maximum value of loss tangent (T$\alpha$) | °C | 105 | 110 | 115 | 111 | 103 | 112 | 122 | 115 |
| Particle size in film | nm | 75 | 75 | 75 | 75 | 60 | 60 | 150 | 75 |
| Thickness | $\mu$m | 55 | 55 | 55 | 55 | 55 | 55 | 55 | 55 |
| Surface roughness | | | | | | | | | |
|   Surface A | nm | 30 | 29 | 27 | 30 | 40 | 58 | 26 | 71 |
|   Surface B | nm | 43 | 40 | 37 | 39 | 58 | 64 | 63 | 84 |
|   Difference | nm | 13 | 11 | 10 | 9 | 18 | 6 | 37 | 13 |
| Total haze | % | 0.2 | 0.2 | 0.2 | 0.2 | 0.8 | 0.8 | 0.9 | 1.2 |
| Internal haze | % | 0 | 0 | 0 | 0 | 0 | 0 | 0 | 0 |
| External haze | | | | | | | | | |
|   Surface A | % | 0.1 | 0.1 | 0.1 | 0.1 | 0.3 | 0.3 | 0.1 | 0.5 |
|   Surface B | % | 0.1 | 0.1 | 0.1 | 0.1 | 0.5 | 0.5 | 0.8 | 0.7 |
|   Difference | % | 0 | 0 | 0 | 0 | 0.2 | 0.2 | 0.7 | 0.2 |
| Acetone insoluble content | mass% | 58 | 52 | 46 | 52 | 65 | 55 | 20 | 61 |
| Printability | | | | | | | | | |
|   Surface A | | A | A | A | A | A | A | A | B |
|   Surface B | | A | A | A | A | B | B | B | B |

(continued)

| | | | | | | | | | |
|---|---|---|---|---|---|---|---|---|---|
| Printability | | | | | | | | | |
| Weather resistance (Super UV) | hrs | 1100 | 400 | 450 | 350 | 350 | 350 | 450 | 1100 |
| Resistance to whitening under heat | | A | C | A | A | A | A | A | A |
| Resistance to whitening under impact | | A | C | A | A | A | B | A | A |
| Trouser tear strength (MD) | N/mm | 2.3 | 1.1 | 1.6 | 2 | 1.7 | 1.4 | 1.7 | 2.2 |

(Evaluation results)

In Examples 1 to 6, acrylic resin films having a good surface smoothness, having a small total haze, having a suitable hardness and having crack resistance can be produced.

On the other hand, in Comparative Example 1 in which acrylic multilayer structure polymer particles (A) having a large particle size were used and the blending amount of the methacrylic resin (B) was large, the resultant acrylic resin film had a high storage modulus and lost flexibility; and in Comparative Example 2 in which the film was produced under the condition of a low roll temperature, the film had a high haze.

Reference Signs List

| 1 | Film Production Device |
| 110 | Gear Pump |
| 111 | Raw Material Input Part |
| 112 | Screw Part |
| 113 | T-die |
| 113A | Discharge Port of T-die |
| 120 | Cooling Roll |
| 121 | First Cooling Roll |
| 122 | Second Cooling Roll |
| 123 | Third Cooling Roll |
| 124 | Fourth Cooling Roll |
| 210 | Film |
| 210M | Raw Material Composition |
| R1 | Film Forming, Cooling and Solidification Step |
| R2 | Conveyance Step |

**Claims**

1. An acrylic resin film having a total haze of 0.01 to 1.0%, a difference in external haze between both surfaces of 0 to 0.5%, a storage modulus (E'), as measured at 23°C according to dynamic viscoelastometry under the conditions of a sinusoidal vibration of 1 Hz and a temperature elevation rate of 3°C/min, of 1000 to 2200 MPa, and a maximum value of a loss tangent (T$\alpha$) of 90°C to 120°C.

2. The acrylic resin film according to claim 1, wherein the surface roughness of both surfaces is 1 to 50 nm.

3. The acrylic resin film according to claim 1 or 2, wherein the external haze of at least one surface is 0.2% or less.

4. The acrylic resin film according to any one of claims 1 to 3, having a trouser tear strength of 1.3 N/mm or more.

5. The acrylic resin film according to any one of claims 1 to 4, containing acrylic multilayer structure polymer particles in an amount of 65 to 100% by mass.

6. The acrylic resin film according to claim 5, wherein the particle size of the acrylic multilayer structure polymer particles is 10 to 200 nm.

7. The acrylic resin film according to claim 5 or 6, wherein the acrylic multilayer structure polymer particles are acrylic multilayer structure polymer particles (A) having at least one crosslinked elastic polymer layer comprising 60% by mass or more of an alkyl acrylate monomer unit in which an alkyl group has 1 to 8 carbon atoms and/or a conjugated dienic monomer unit,
and having at least one thermoplastic polymer layer comprising 70% by mass or more of an alkyl methacrylate monomer unit.

8. The acrylic resin film according to any one of claims 1 to 7, containing a UV absorbent of benzotriazoles or triazines.

9. A printed resin film of the acrylic resin film according to any one of claims 1 to 8, wherein printing is performed on at least one surface thereof.

10. A film for decoration of the acrylic resin film according to any one of claims 1 to 8.

11. A film for construction of the acrylic resin film according to any one of claims 1 to 8.

12. A laminated film having a layer of a metal and/or a metal oxide, a thermoplastic resin layer or a substrate layer on at least one surface of the acrylic resin film according to any one of claims 1 to 8.

13. A laminated body having the laminated film according to claim 12 on the surface of a substrate.

14. A method for producing an acrylic resin film according to any one of claims 1 to 8, comprising a step of melt-extruding a (meth)acrylic resin in a film-like shape through a T-die, and a step of holding the extruded melt in a film-like shape between a pair of cooling rolls, one metal rigid roll and the other metal elastic roll.

[Fig. 1]

# EP 3 733 744 A1

## INTERNATIONAL SEARCH REPORT

| International application No. |
| --- |
| PCT/JP2018/048038 |

### A. CLASSIFICATION OF SUBJECT MATTER
Int.Cl. C08J5/18(2006.01)i, B32B15/082(2006.01)i, B32B27/30(2006.01)i
According to International Patent Classification (IPC) or to both national classification and IPC

### B. FIELDS SEARCHED

Minimum documentation searched (classification system followed by classification symbols)
Int.Cl. C08J5/00-5/02, C08J5/12-5/22, B32B1/00-43/00, C08K3/00-13/08, C08L1/00-101/14

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2017/141873 A1 (KURARAY CO., LTD.) 24 August 2017, claims 1-8, 14, paragraphs [0031]-[0032], [0044], [0052]-[0077], [0105]-[0106], [0112]-[0125], examples 1-4, table 1 & EP 3418326 A1, paragraphs [0043]-[0047], [0073], [0082]-[0118], [0149]-[0151], [0159]-[0180], examples 1-4, table 1, fig. 1 & CN 108699266 A & KR 10-2018-0109072 A | 1-14 |

☒ Further documents are listed in the continuation of Box C.　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 March 2019 (18.03.2019) | 26 March 2019 (26.03.2019) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

24

**INTERNATIONAL SEARCH REPORT**

International application No.

PCT/JP2018/048038

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-306192 A (SUMITOMO CHEMICAL INDUSTRY COMPANY LIMITED) 17 November 1998, claims 1-9, paragraphs [0009]-[0011], [0017]-[0019], [0023], examples 1-3, table 1 (Family: none) | 1-14 |
| A | WO 2014/050608 A1 (FUJIFILM CORP.) 03 April 2014, claims 1, 13-15, paragraphs [0015]-[0023], [0148]-[0150] & US 2015/0183977 A1, claims 1, 11-13, paragraphs [0055]-[0066], [0265]-[0280] & CN 104541189 A & KR 10-2015-0041780 A | 1-8, 12-14 |
| A | WO 2017/188290 A1 (KURARAY CO., LTD.) 02 November 2017, claims 1-12, paragraphs [0007], [0016]-[0043], [0072]-[0079], [0092]-[0102], examples 1-6, comparative example 7, tables 1-3 & CN 109071911 A | 1-14 |
| A | WO 2015/182750 A1 (KURARAY CO., LTD.) 03 December 2015, claims 1, 11-14, paragraphs [0005], [0147]-[0158], examples 1-17, comparative examples 3, 8 & CN 106414599 A & KR 10-2017-0013253 A & TW 201605955 A | 1-8, 12-14 |
| A | JP 2017-186471 A (KURARAY CO., LTD.) 12 October 2017, claims 1, 4, 6, 10, paragraphs [0001], [0048]-[0062], [0072]-[0074], examples 1-12, tables 1, 2 (Family: none) | 1-9, 12-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016218478 A
- JP 2011521068 A
- JP 2011154360 A